# DEMANDE DE BREVET EUROPEEN

(11) **EP 0 691 497 A1**
(43) Date de publication de la demande: **10.01.1996**
(21) Numéro de dépôt: 95420118.2
(22) Date de dépôt: 03.05.1995
(51) Int. Cl.: F16L 3/233

(54) **Attache pour boîtier de raccord de tubes annelés contre un élément tubulaire**

(30) Priorité: 06.07.1994 FR 9408591
(71) Demandeur: SOFANOU S.A., F-25340 Clerval (FR)
(72) Inventeur: Streit, Bernard, F-25340 Anteuil (FR)
(74) Mandataire: Kiehl, Hubert

(57) **Abrégé**

L'invention est relative à une attache pour boîtier de raccord de tubes annelés contre un élément tubulaire, ce boîtier étant muni en sa face externe d'au moins une paire de glissières-crochets entourant un méplat. Cette attache comporte un lacet ou ruban (10) présentant une série de crans (11) pouvant être retenus par une languette (22) protubérant à l'intérieur d'un passage (24) ménagé dans une tête d'accrochage (20) située à l'une des extrémités du lacet. Le lacet ou ruban comprend, de plus, une cage (30) enfermant la tête (42) d'une broche dont l'axe (44) traverse librement la paroi de fond (32) de la cage (30), et dont l'extrémité de cet axe est solidaire d'une plaquette (46) prévue pour être insérée dans la glissière-crochet du boîtier.

## Description

La présente invention est relative à une attache utilisée pour fixer contre un élément tubulaire un boîtier servant à raccorder les extrémités de deux ou plusieurs tubes annelés.

Les tubes annelés, c'est-à-dire ceux dont la forme ressemble à une succession d'anneaux reliés les uns aux autres, sont usuellement réalisés en matière plastique tel que polypropylène extrudé. Ces tubes permettent la réalisation de réseaux de gaines de protection complexes pour des faisceaux de fils ou câbles électriques au sein d'un bâtiment ou d'une automobile et notamment dans le compartiment moteur. En effet, compte-tenu du faible espace disponible, ces gaines ou tuyaux doivent pouvoir suivre de très près les parois non rectilignes et contourner les différents organes rencontrés. Avec de tels tubes, on peut justement réaliser des courbes dont le rayon de courbure est inférieur à trois fois leur diamètre externe sans que ceux-ci ne se déforment vers l'intérieur ou même se cassent.

Pour réaliser de tels réseaux de manière aisée et efficace, on emploie, aux intersections de tubes, des boîtiers de raccord en plastique mettant à profit l'aspect annelé de ces tubes pour en assurer un blocage longitudinal. A ce titre, les documents US 3 711 633, US 4 443 031 et FR 2 355 387 divulguent des boîtiers se présentant sous la forme générale d'un T s'ouvrant sensiblement par rapport au plan transversal médian en deux coquilles symétriques également en T, cette ouverture permettant d'y insérer les tubes annelés. Les coquilles sont ensuite refermées et verrouillées grâce à des crochets venant s'engager dans des boucles disposées le long de leur bord d'ouverture. L'intérieur de ces boîtiers est garni de nervures transversales aux ouvertures circulaires prévues pour les tubes, ces nervures venant se loger entre deux anneaux du tube annelé assurant ainsi un maintien longitudinal en plus du maintien latéral.

Afin de pouvoir fixer ce réseau contre les parois, ces boîtiers de raccord, ainsi que les pièces de fixation de tubes, sont garnis en leur face externe d'une ou plusieurs paires de glissières parallèles faisant office de crochets et disposées de part et d'autre d'un méplat. Dans chaque glissière-crochet est alors insérée la tête d'une broche de fixation en plastique dont l'axe flexible radialement est introduit dans un orifice de la paroi à l'arrière duquel il s'élargit pour se maintenir en place.

Ces glissières-crochets peuvent également être mises à profit pour fixer un boîtier contre un élément tubulaire tel qu'une Durit de moteur.

A cette fin, une attache connue comprend une première partie formée d'un lacet ou ruban présentant une série de crans pouvant être retenus par une languette protubérant à l'intérieur d'un passage ménagé dans une tête d'accrochage située à l'une des extrémités du lacet. La deuxième partie de l'attache se présente sous la forme d'une plaquette prévue pour être insérée dans la glissière-crochet du boîtier, cette plaquette étant garnie d'une douille orthogonale dans laquelle peut être introduit un tenon protubérant orthogonalement du lacet, ce tenon étant situé proche de la tête d'accrochage. Le tenon présente une nervure transversale circulaire venant s'accrocher dans une rainure interne en correspondance de la douille assurant ainsi simultanément un maintien longitudinal et une liberté en rotation permettant d'orienter le boîtier par rapport à la Durit.

Toutefois, il s'est avéré, dans la pratique, que le point faible de cette attache connue est la liaison entre la douille et le tenon. En effet, de part sa conception, cette liaison impose un écartement important entre le boîtier et la Durit, ce qui la fragilise en cas d'efforts transversaux. De plus, soit la nervure est sur-dimensionnée et les deux parties de l'attache sont difficiles à assembler, soit elle est sous-dimensionnée et le boîtier risque de se séparer à tout moment de la Durit. Enfin, ce mode de réalisation en deux parties est onéreux et implique la surveillance de la disponibilité en permanence de ces deux parties.

Le but de la présente invention est une attache de fixation du type mentionné ci-dessus qui soit facile d'emploi, fiable et moulable d'un seul tenant pour limiter d'autant les coûts de réalisation.

Ces buts sont atteints grâce à une attache pour boîtier de raccord de tubes annelés contre un élément tubulaire, ce boîtier étant muni en sa face externe d'au moins une paire de glissières-crochets entourant éventuellement un méplat, cette attache comportant un lacet ou ruban présentant une série de crans pouvant être retenus par une languette protubérant à l'intérieur d'un passage ménagé dans une tête d'accrochage située à l'une des extrémités du lacet, du fait que le lacet ou ruban comprend, de plus, une cage enfermant la tête d'une broche dont l'axe traverse librement la paroi de fond de la cage, et dont l'extrémité de cet axe est solidaire d'une plaquette prévue pour être insérée dans la glissière-crochet du boîtier.

Selon un mode de réalisation préféré, l'attache, dont les parois latérales de la cage sont ajourées, est réalisée par injection de matière thermoplastique dans un moule dans lequel le pourtour de l'axe de la broche est formé par une double série de coquilles en arc-de-cercle intercalée, la première série traversant la tête de la broche et la paroi de fond de la cage ; et la seconde série traversant la plaquette et la paroi de fond de la cage, et ce parallèlement à l'axe de la broche.

Ainsi, dans l'attache selon l'invention, la tête de la broche de maintien de la plaquette est enfermée dès l'origine dans une cage à l'intérieur de laquelle elle est libre de tourner mais dont elle ne peut plus se dégager intempestivement. De plus, cette attache a pu être réalisée d'un seul tenant grâce d'une part aux ouvertures ménagées dans les parois latérales de la cage, et d'autre part aux deux séries de coquilles séparant entièrement l'axe de la paroi de fond qu'elle traverse, la première série de coquilles laissant une pluralité de ponts de liaison entre la tête et l'axe, la deuxième série laissant un même nombre de ponts de liaison entre l'axe et la plaquette, ces seconds ponts étant décalés par rapport aux premiers.

Avantageusement, des points de rupture sont laissés lors du moulage de l'attache entre d'une part la tête et/ou l'axe et/ou la plaquette de la broche et d'autre part la paroi de fond de la cage. Ainsi, la plaquette est initialement maintenue dans la même direction que le lacet ou ruban, ce qui facilite le stockage de cette attache et sa première installation contre une Durit ou boîtier.

L'invention sera mieux comprise à l'étude d'un mode de réalisation pris à titre nullement limitatif et illustré dans les figures annexées dans lesquelles :
- la figure 1 est une vue en perspective d'une attache selon l'invention, et
- les figures 2a et 2b sont respectivement des vues en coupe longitudinale et de dessus de l'attache de la figure 1.

Comme illustré sur les figures, l'attache d'un boîtier de raccord contre un élément tubulaire comprend d'une part une plaquette 46 prévue pour être insérée dans une glissière-crochet d'un boîtier, et d'autre part un lacet 10 prévu pour être enroulé autour de l'élément tubulaire jusqu'à introduire sa première extrémité pointue au travers d'une tête d'accrochage 20 ménagée en son autre extrémité.

La plaquette 46 présente deux languettes latérales chacune terminée par une butée arrière faisant office d'élément détrompeur, ces languettes venant s'insérer sous les crochets de la glissière du boîtier. Cette plaquette est maintenue en place au moyen d'un doigt flexible frontal présentant, proche de son extrémité chanfreinée, une ouverture venant s'enclencher par-dessus un tenon situé peu après le méplat de la glissière-crochet.

Par ailleurs, le maintien du serrage du lacet 10 autour de l'élément tubulaire est réalisé grâce à une série de crans 11 ménagés sur l'une des faces du lacet, l'un de ces crans venant s'encliqueter derrière une languette 22 protubérant dans le passage transversal 24 de la tête d'accrochage 20.

Plus particulièrement selon l'invention, la liaison entre le lacet 10 et la plaquette 46 est réalisée au moyen d'une broche dont l'axe 44 protubère orthogonalement de cette plaquette et dont la tête 42 est prisonnière d'une cage 30 solidaire du lacet.

Afin de permettre une réalisation de cette attache par simple injection de matière thermoplastique dans un moule, les faces latérales 34 de cette cage ainsi que sa face supérieure située dans le prolongement du lacet 10 sont ajourées. En d'autres termes, cette cage est composée de trois parois pleines successives et orthogonales l'une par rapport à l'autre, à savoir, une paroi avant, une paroi de fond 32 et une paroi arrière ; les bords supérieurs des parois avant et arrière étant reliés par deux ponts latéraux de matière présentant, en leur tranche supérieure, une encoche en V facilitant leur positionnement sur l'élément tubulaire.

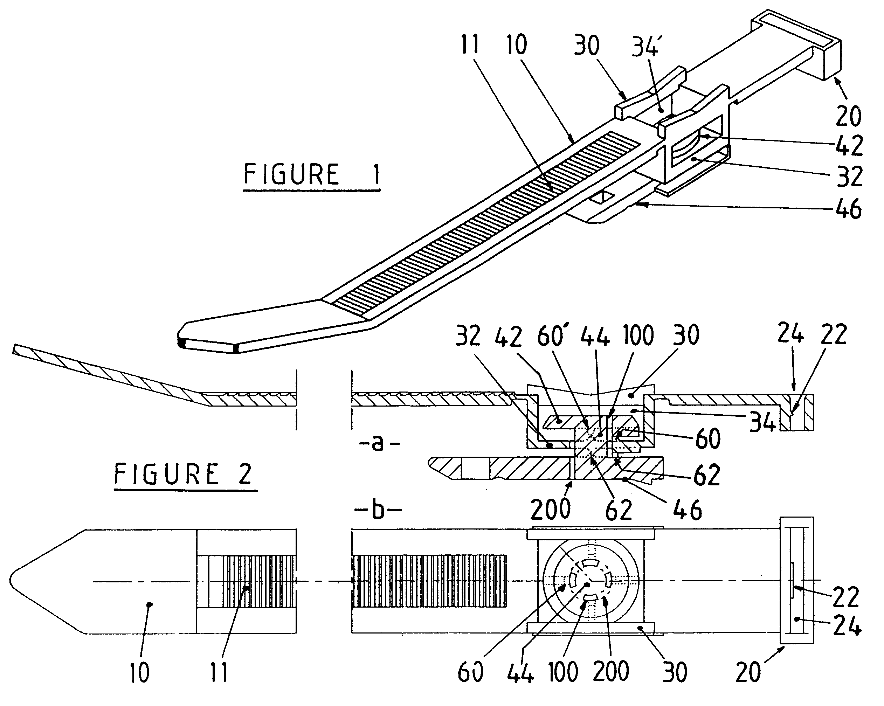

Plus particulièrement selon l'invention, la réalisation du pourtour libre de l'axe 44 de la broche traversant la paroi de fond 32 de la cage est assurée au moyen d'une double série de coquilles en arc-de-cercle 100,200 l'une venant par le haut, l'autre venant par le bas, ces deux séries s'intercalant pour réaliser un cercle complet comme mieux visible sur la figure 2b. Comme on peut le constater sur la figure 2a, la série de coquilles 100 traverse respectivement la tête 42 de la broche et la paroi 32 de la cage pour s'arrêter au niveau supérieur de la plaquette 46. A l'inverse, la seconde série de coquilles 200 traverse la plaquette 46 et la paroi 32 pour s'arrêter juste en dessous de la tête de broche 42. Ainsi, la tête 42 et la plaquette 46 sont en fait respectivement reliées à l'axe 44 de la broche par une série de ponts de matière, en l'occurrence quatre ponts disposés en croix. L'épaisseur de ces ponts correspondant respectivement à l'épaisseur de la plaquette et de la tête, s'avère suffisante pour assurer une solidité satisfaisante de ces liaisons.

Comme on peut mieux l'observer sur les figures 2, la forme du moule laisse apparaître sous la face inférieure de la tête 42 et sous la face inférieure de la paroi de fond 32 une série de nervures disposées en croix et de section transversale triangulaire, chaque nervure se terminant, proche de l'axe 44, en un petit pont de matière la liant à la paroi inférieure située en vis-à-vis. Ainsi, quatre points de rupture 60 relient la tête 42 à la face supérieure de la paroi 32, alors que quatre autres points de rupture 62 relient la face inférieure de cette même paroi de fond à la plaquette 46. Ces points de rupture maintiennent, dans un premier temps, la plaquette 46 orientée dans le sens longitudinal du lacet 10, ce qui facilite déjà le stockage de ces attaches.

Un mode d'utilisation de cette attache consiste à installer et à serrer d'abord son lacet autour d'une Durit, et ce en tirant sa première extrémité au travers du passage 24 de la tête d'accrochage 20. La plaquette 46 étant alors immobile, on peut alors aisément insérer la glissière-crochet du boîtier dans les languettes latérales de cette plaquette. S'il s'avère nécessaire de réorienter le boîtier de raccord par rapport à la Durit, il convient alors d'appliquer un mouvement de rotation à ce boîtier pour provoquer la cassure des ponts de matière 60,62, ce qui libère, en rotation, l'axe 44 par rapport à la paroi de fond 32. Toutefois, la tête 42 de la broche restant enfermée dans la cage 30, le boîtier de raccord ne peut en aucun cas se détacher de sa Durit.

Comme on peut mieux l'observer sur la figure 2a, le mode de réalisation de cette attache permet d'optimiser la hauteur de la cage 30, l'épaisseur de la tête 42 et la hauteur de l'axe 44 de telle sorte que le boîtier de raccord reste le plus près possible de sa Durit. Cette proximité assure une bonne résistance de l'attache à des efforts transversaux accidentels pouvant être appliqués sur le boîtier.

De nombreuses améliorations peuvent être apportées à cette attache dans le cadre des revendications.

## Revendications

1. Attache pour boîtier de raccord de tubes annelés contre un élément tubulaire, ce boîtier étant muni en sa face externe d'au moins une paire de glissières-crochets, cette attache comportant un lacet ou ruban (10) présentant une série de crans (11) pouvant être retenus par une languette (22) protubérant à l'intérieur d'un passage (24) ménagé dans une tête d'accrochage (20) située à l'une des extrémités du lacet, caractérisée en ce que le lacet ou ruban comprend, de plus, une cage (30) enfermant la tête (42) d'une broche dont l'axe (44) traverse librement la paroi de fond (32) de la cage (30), et dont l'extrémité de cet axe est solidaire d'une plaquette (46) prévue pour être insérée dans la glissière-crochet du boîtier.

2. Attache selon la revendication 1 dont les parois latérales sont ajourées (34), caractérisée en ce qu'elle est réalisée par injection de matière thermoplastique dans un moule dans lequel le pourtour de l'axe (44) de la broche est formé par une double série de coquilles en arc-de-cercle intercalée, la première série (100) traversant la tête (42) de la broche et la paroi de fond (32) de la cage ; et la seconde série (200) traversant la plaquette (46) et la paroi de fond (32) de la cage, et ce parallèlement à l'axe de la broche.

3. Attache de raccord selon la revendication 2, caractérisée en ce que des points de rupture (60,62) sont laissés lors du moulage de l'attache entre d'une part la tête (42) et/ou l'axe (44) et/ou la plaquette (46) de la broche et d'autre part la paroi de fond (32) de la cage (30).
